# EUROPEAN PATENT SPECIFICATION

(11) **EP 1 779 927 B1**
(45) Date of publication and mention of the grant of the patent: **21.03.2018**
(21) Application number: 06020870.9
(22) Date of filing: 04.10.2006
(51) Int. Cl.: B01J 23/40, B01J 21/12, B01J 29/06, B01J 37/025, B01D 53/94, B01J 23/42, B01J 29/80, B01J 35/00, B01J 29/40, B01J 29/76

(54) **Exhaust gas treating catalyst and use thereof for treating exhaust gases from diesel engines**
Abgasbehandlungskatalysator und seine Verwendung zur Behandlung von Dieselabgasen
Catalyseur de traitement de gaz d'échappement et son utilisation pour le traitement de gaz d'échappement de moteur diesel

(30) Priority: 20.10.2005 JP 2005305542
(43) Date of publication of application: 02.05.2007
(73) Proprietor: N.E. Chemcat Corporation, Minato-ku, Tokyo (JP)
(72) Inventor: Banno, Yasuyuki Numazu Plant, Numazu-shi Shizuoka 4100314 Japan (JP); Kanno, Yasuharu Numazu Plant, Numazu-shi Shizuoka 4100314 Japan (JP); Nagata, Makoto Numazu Plant, Numazu-shi Shizuoka 4100314 Japan (JP)
(74) Representative: Müller-Boré & Partner Patentanwälte PartG mbB

(56) References cited:
- EP-A- 1 475 141
- JP-A- 2003 305 338
- US-A- 5 928 981
- US-A1- 2001 043 896
- US-B1- 6 248 684
- US-B1- 6 677 264
- LONG R ET AL: "Noble metal (Pt,Rh, Pd) promoted Fe-ZSM-5 for selective catalytic oxidation of ammonia to N2 at low temparatures", 1 March 2002 (2002-03-01), CATALYSIS LETTERS, SPRINGER, DORDRECHT, PAGE(S) 353 - 357, XP002990131, ISSN: 1011-372X

## Description

The present invention relates to an oxide catalyst for exhaust gas cleaning up, an oxide catalyst of honeycomb structure using the above oxide catalyst and a method for cleaning up exhaust gases using the above oxide catalyst of honeycomb structure; more specifically an oxide catalyst for exhaust gas cleaning up for removing carbon monoxide, unburnt hydrocarbons, soluble organic fractions and soot discharged from internal combustion engines, in particular diesel engines, resistant to poisoning by sulfur, working in a reduced quantity, and causing sulfate emissions to a limited extent while treating exhaust gases of high temperature; an oxide catalyst of honeycomb structure using the above oxide catalyst and a method for cleaning up exhaust gases using the above oxide catalyst of honeycomb structure.

Exhaust gases from devices burning fossil fuels, e.g., boilers, devices in power plants and internal combustion engines, e.g., vehicles, contain various hazardous substances.

Internal combustion engines, e.g., diesel engines burning distillate fuels, discharge exhaust gases containing various substances produced by combustion of fuels, and in large quantities. For example, the exhaust gases contain soot, sulfur oxides (SOx, hereinafter sometimes referred to as sulfates), unburnt hydrocarbons (HC), e.g., soluble organic fractions (hereinafter sometimes referred to as SOF), carbon monoxide (CO), particulate matter (PM) and nitrogen oxides (NOx). Various procedures have been proposed for removing these components hazardous to human bodies and global environments.

Some procedures for removing carbon monoxide (CO), unburnt hydrocarbons (HC) and soluble organic fractions (SOF) position an oxide catalyst with catalytic component supported by a carrier of integral structure, through which exhaust gases can pass, in an exhaust gas passage to oxidize these substances. Oxide catalysts for treating diesel engine exhaust gases, referred to as DOCs, have been extensively studied.

Emissions of sulfates as hazardous substances discharged from diesel engines are being slowly reduced, as low-sulfur diesel fuel containing sulfur at 50 ppm or less, sometimes as low as at around 10 ppm, are spreading. However, high-sulfur diesel fuels containing sulfur at several thousand ppm are not removed from all fuel markets, and such high-sulfur diesel fuels are still being sold in many countries abroad.

Sulfur in fuel oil for diesel vehicles or the like is discharged in the form of sulfates as the fuel is burnt. They form secondary particles with carbon components in the exhaust gases as nuclei. These particles are inhaled deep into the lung alveoli, and anticipated to cause adverse effects on human health. Therefore, the governments have set regulations on sulfate emissions, urging development of the cleaning up procedures.

Sulfur in a fuel also causes deactivation of exhaust gas cleaning up catalysts, referred to as sulfur poisoning, which is accelerated as sulfur content in fuel increases. A catalyst deactivated by sulfates loses performance gradually, and it is not easy to rejuvenate, once it is poisoned. The catalysts have been demanded to be still developed further in order to satisfy the exhaust gas standards, which are becoming more stringent recently, even when a low-sulfur diesel fuel oil is used.

Exhaust gas cleaning up catalysts generally include a noble metal as a catalytic active species. For a noble metal to effectively work in the presence of hazardous substances, it itself should keep a high specific surface area. Therefore, it is frequently supported by gamma-alumina of high specific surface area as a base, which has high heat resistance and activity.

It is necessary to load a sufficient quantity of such catalyst to clear the vehicle exhaust gas standards, in consideration of the standards becoming more stringent recently. This also needs a larger quantity of alumina.

Of exhaust gas cleaning up catalyst carriers, alumina tends to adsorb sulfur compound, e.g., SO₂, with the result that an alumina-carried catalyst is poisoned by sulfur while cleaning up exhaust gases produced by combustion of a high-sulfur fuel, and is deactivated.

An oxide catalyst for diesel engines (DOC) should be placed under an adequate temperature atmosphere in order to be itself activated efficiently. It cannot exhibit oxidation functions not only for HC present in exhaust gases but also for CO and SOF, unless the temperature conditions are satisfied. In order to cope with these problems, an additional fuel is burnt when catalyst temperature is insufficient, to increase exhaust gas temperature.

This operational mode, however, causes problems of releasing the sulfur component adsorbed during the above period all at once in the exhaust gases, as changed engine operating conditions increase exhaust gas temperature, increasing sulfate concentration in the exhaust gases beyond the standards. The "condition under which sulfates are discharged" as used in this specification hereinafter means the condition under which sulfur compounds, e.g., SO₂, deposited on a catalyst is released all at once as a result of increased catalyst temperature, unless otherwise stated.

JP-A 6-63411 proposes a technique for suppressing emission of sulfur compounds in the form of sulfates by use of a material which controls adsorption of sulfur compounds thereon for a base which carries a noble metal, in order to improve performance of hazardous component cleaning up.

The document discloses a catalyst with a transition metal supported by activated carbon to abate sulfate emissions. When this catalyst works at a high exhaust gas temperature beyond 510°C, HC or the like adsorbed on the activated carbon is decomposed and gasified, and even carbonized to also attack the activated carbon itself. As a result, the activated carbon has expanded pore diameter and pore volume to lose stability as the carrier. Moreover, this catalyst fails to exhibit sufficient oxidation performance for HC, CO, SOF, soot and so forth.

So far, no catalyst has exhibited high oxidation performance for HC, CO, SOF, soot and so forth, and, at the same time, sufficient resistance to sulfur poisoning.

One of the measures to cope with sulfur poisoning is to load a large quantity of catalyst to keep necessary cleaning up performance, even when the catalyst is poisoned to have decreased activity per unit catalyst volume. It is however difficult for a vehicle to provide a sufficient space for a large quantity of catalyst in consideration of decreasing vehicle weight and designs as the essential considerations. A honeycomb structure, which has been widely used as a carrier for vehicle catalysts, will encounter problems, when impregnated with a large quantity of catalyst, e.g., decreased honeycomb cell cross-sectional area, clogging and increased pressure drop, which may lead to deterioration of vehicle driving performance.

Under these situations, there are increased demands for oxide catalysts for exhaust gas cleaning up, developed to control effects of sulfur poisoning by a limited quantity of catalyst and abate sulfate concentration in exhaust gases.

EP-A-1 475 141 describes a catalyst which purges a diesel engine exhaust gas of HC, CO, and SOF and reduces the emission of particulates as well and a method for the production thereof. The catalyst for purifying a diesel engine exhaust gas has deposited on a refractory three-dimensional structure a catalyst component comprising silica-alumina supporting at least one noble metal selected from the group consisting of platinum, palladium, and rhodium and zeolite. This catalyst is produced by adding a noble metal component into a slurry of silica-alumina thereby inducing chemical adsorption, then adding zeolite to the resultant mixture thereby obtaining a mixed slurry of a noble metal-supporting silica-alumina and zeolite, dipping a refractory three-dimensional structure in the slurry thereby inducing deposition of the catalyst component, and subsequently calcining the resultant composite. US 5,928,981 describes a catalyst for purifying the exhaust gases from diesel engines. The catalyst contains a zeolite mixture of several zeolites with different moduli and platinum group metals as well as further metal oxides from the group aluminum silicate, aluminum oxide and titanium oxide, wherein the aluminum silicate has a ratio by weight of silicon dioxide to aluminum oxide of 0.005 to 1 and the platinum group metals are deposited on only the further metal oxides. US 6,677,264 describes a catalyst for purifying exhaust gases of a diesel engine. The catalyst contains two functional layers superimposed on an inert supporting body, whereby the first layer, which is situated directly on the supporting body, has a nitrogen oxide storage function and the second layer, which is in direct contact with the exhaust gas, has a catalytic function. The second functional layer additionally has a hydrocarbon-storage function and its catalytic function is provided by catalytically active noble metals of the platinum group which are deposited in highly dispersed form on finely divided, acidic carrier materials. US-A-2001/043896 describes a catalyst for purifying the exhaust gases of diesel engines, which catalyst contains at least one zeolite and, additionally, at least one of the support oxides aluminum oxide, silicon dioxide, titanium dioxide and aluminum silicate and at least one of the noble metals platinum, palladium, rhodium and iridium. In this catalyst the atoms of the noble metals have a mean oxidation number of less than +2.5, on average more than 3 metal ligands and less than 3 oxygen ligands and are present on the zeolites and support oxides in the form of crystallites having a mean particle size of from 1 to 6 nm. R. Q. Long, R. T. Yang, Catal. Lett. 2002, 78, 353 - 357 discloses noble metal promoted Fe-ZSM-5 catalysts which afford a selective catalytic oxidation of ammonia to nitrogen at low temperatures. JP-A-2003-305338 discloses a catalyst for purifying exhaust gas which contains iron-substituted zeolite as a first component and zeolite carrying a noble metal or porous silica carrying a noble metal as a second component. US 6,248,684 B1 discloses a catalyst composition for treating a diesel engine exhaust stream containing gaseous hydrocarbons and a volatile organic fraction comprises a refractory carrier on which is disposed a coating of a catalytic material comprising: bulk ceria having a BET surface area of at least about 10 m²/g, iron-doped β-zeolite and a catalytic metal selected from the group consisting of platinum and palladium.

The present invention is developed to solve the above problems involved in conventional techniques. It is an object of the present invention to provide an oxide catalyst for exhaust gas cleaning up for removing carbon monoxide, unburnt hydrocarbons, soluble organic fractions and soot discharged from internal combustion engines, in particular diesel engines, resistant to poisoning by sulfur, working in a reduced quantity, and causing sulfate emissions to a limited extent while treating exhaust gases of high temperature. It is another object to provide an oxide catalyst of integral structure using the above oxide catalyst. It is still another object to provide a method for cleaning up exhaust gases using the above oxide catalyst of integral structure.

The inventors of the present invention have found, after having extensively studied to achieve the above objects, that a combination of oxide catalyst containing a noble metal, silica-alumina-based carrier and zeolite can efficiently cleaning up exhaust gases, in particular those from diesel engines, while controlling effects of sulfur poisoning by a reduced quantity of catalyst and abating sulfate concentration in the exhaust gases, when the carrier has an integral structure and is coated with the catalyst, achieving the present invention.

The first aspect of the present invention is an oxide catalyst for exhaust gas cleaning up which can suppress evolution of sulfates, containing at least one species of noble metal (A) showing a catalytic activity for oxidation of hydrocarbons, a silica/alumina-based base (B) which supports the noble metal (A) and zeolite (C), wherein the zeolite (C) contains a β-type zeolite and has the cation site ion-exchanged with iron, wherein the noble metal (A) is at least one species selected from the group consisting of platinum, palladium and rhodium, and wherein the silica/alumina-based base (B) contains silica at 1 to 30% by mass.

The second aspect of the present invention is the oxide catalyst of the first aspect for exhaust gas cleaning up, wherein the noble metal (A) is essentially composed of platinum.

The third aspect of the present invention is the oxide catalyst of the first or second aspect for exhaust gas cleaning up, wherein the silica/alumina-based base (B) has a specific surface area of 200 m²/g or more.

The fourth aspect of the present invention is an oxide catalyst of honeycomb structure, wherein a honeycomb-shaped carrier is coated with the oxide catalyst of one of the first to third aspects for exhaust gas cleaning up.

The fifth aspect of the present invention is the oxide catalyst of honeycomb structure of the fourth aspect, wherein the honeycomb-shaped carrier is coated with the oxide catalyst for exhaust gas cleaning up at 70 to 170 g/L of the carrier.

The sixth aspect of the present invention is the oxide catalyst of honeycomb structure of the fourth or fifth aspect, wherein the noble metal (A) is incorporated at 1 to 10 g/L of the carrier.

The seventh aspect of the present invention is the oxide catalyst of honeycomb structure of one of the fourth to sixth aspects, wherein the silica/alumina-based base (B) is incorporated at 40 to 100 g/L of the carrier.

The eighth aspect of the present invention is the oxide catalyst of honeycomb structure of one of the fourth to seventh aspects, wherein the zeolite (C) is incorporated at 20 to 60 g/L of the carrier.

The ninth aspect of the present invention is the oxide catalyst of honeycomb structure of one of the fourth to eighth aspects, wherein the carrier of integral structure is of a flow-through type having a cell density of 15.5 to 139.5 cells/cm² (100 to 900 cells/in²).

The 10^{th} aspect of the present invention is a method for exhaust gas cleaning up, wherein the oxide catalyst of honeycomb structure according to one of the fourth to ninth aspects is positioned in an exhaust gas passage of diesel engine and allows the exhaust gases to pass therethrough.

The 11^{th} aspect of the present invention is the method according to the 10^{th} aspect for exhaust gas cleaning up, wherein a fuel oil which the diesel engine burns contains sulfur at 10 ppm or more.

The oxide catalyst of the present invention for exhaust gas cleaning up is resistant to sulfur poisoning, reduces quantity of sulfur compounds adsorbed thereon, and hence can prevent sulfur compounds from being released all at once in the form of sulfate to keep sulfate concentration in exhaust gases below the related standard.

Therefore, it can prevent discharge of exhaust gases containing sulfate at a high concentration, when these gases are produced by combustion of a sulfur-containing fuel, and, at the same time, can keep a high exhaust gas cleaning up capacity for hazardous substances, e.g., HC, SOF and CO, by the synergistic effects produced by its components of a specific species of high catalytic activity, silica/alumina-based base and zeolite. In particular, it exhibits notable effects when used for cleaning up hazardous components in exhaust gases discharged from diesel engines which burn a high-sulfur fuel.

Moreover, the oxide catalyst of the present invention for exhaust gas cleaning up can exhibit cleaning up capacity equivalent to or higher than a catalyst produced based on a conventional concept by a reduced quantity while suppressing deposition of sulfur compounds thereon. Therefore, it can save the production cost, work to reduce pressure drop of exhaust gases, when a flow-through structure coated with the catalyst is used, and hence improve vehicle driving performance.
Figure 1 is a graph illustrating CO cleaning up rates of the catalysts prepared in EXAMPLE 1, and COMPARATIVE EXAMPLES 1 and 2.
Figure 2 is a graph illustrating HC cleaning up rates of the catalysts prepared in EXAMPLE 1, and COMPARATIVE EXAMPLES 1 and 2.
Figure 3 is a graph illustrating sulfur deposition rates of the catalysts prepared in EXAMPLE 1, and COMPARATIVE EXAMPLES 1 and 2.

The oxide catalyst for exhaust gas cleaning up, oxide catalyst of honeycomb structure using the above oxide catalyst and method for cleaning up exhaust gases using the above oxide catalyst of honeycomb structure, all of the present invention, are described in detail. The present invention is applicable to any internal combustion engine. However, it is described by taking a diesel engine, in particular on-road diesel engine, for which it can exhibit notable effects.

### 1. Oxide catalyst for exhaust gas cleaning up

The oxide catalyst of the present invention for exhaust gas cleaning up comprises a noble metal showing a catalytic activity for oxidation of hydrocarbons, supported by a heat resistant base, wherein the base contains a silica/alumina-based base and zeolite.

More specifically, it comprises a catalytically active species selected from noble metals (A) and containing platinum as an essential component, silica/alumina-based base (B) which supports the catalytically active species and zeolite (C).

### (A) Noble metal

The noble metal useful for the present invention is at least one species selected from the group consisting of platinum, palladium and rhodium. It is a main catalytically active species for the oxide catalyst of the present invention for exhaust gas cleaning up.

Noble metals are known to have excellent exhaust gas cleaning up functions. Platinum, in particular, has an excellent capacity for oxidizing HC, SOF and CO as reducing components. The catalytic active species exhibiting oxidation capacity include palladium, in addition to platinum. The catalyst of the present invention may be incorporated with one or more other catalytically active species, e.g., base metal element (e.g., iron, copper or vanadium) within limits not harmful to the objects of the present invention.

The oxide catalyst of the present invention is mainly aimed at suppression of sulfate emissions, and the noble metal as the catalytically active species is preferably composed of platinum mainly or essentially. When another component is used together with platinum, it is preferably palladium. The present invention incorporates platinum as the main catalytically active species, because it exhibits excellent resistance to sulfur poisoning and, at the same time, high oxidation performance, when combined with a silica/alumina-based base and zeolite.

Platinum or a noble metal composition with platinum as the main component is incorporated at 1 to 10 g/L of the carrier in the catalyst layer, preferably 2 to 5 g/L. The content beyond the above range is not desirable; the catalyst activity may be insufficient at below 1 g/L, and not so high for the cost at above 10 g/L.

### (B) Silica/alumina-based base

The present invention uses a silica/alumina-based base to support the catalytically active species.

Gamma-alumina has been extensively used for supporting exhaust gas cleaning up catalysts, because it is highly resistant to heat and can support platinum in a state of high specific surface area, so-called highly dispersed state. As discussed above, however, alumina is amenable to sulfur poisoning, and a catalyst supported by a base comprising only alumina will be deactivated because it is poisoned by sulfur present in exhaust gases. The present invention uses silica/alumina in place of alumina to improve resistance to sulfur poisoning.

The silica/alumina-based base for the present invention contains silica at 1 to 30% by mass, preferably 1 to 15% by mass, more preferably 3 to 10% by mass. At below 1% by mass, the base is too rich in alumina to have improved resistance to sulfur poisoning. At above 30% by mass, on the other hand, it may be difficult to highly disperse the noble metal, although exhibiting improved resistance to sulfur poisoning.

The silica/alumina-based base is not limited by a method by which it is produced, and may be selected from the commercial products. In general, the method for producing silica/alumina-based base comprises a step for preparing crude silica/alumina hydrogel or xerogel, and a subsequent step for refining, as required, and calcining for activation. Crude silica/alumina hydrogel is a silica/alumina mixture containing by-product salts formed during the chemical reactions for gelation or solation, and crude silica/alumina xerogel is a silica/alumina mixture containing no water or containing it at a very low content. The hydrogel, when used, should be refined to remove by-products, e.g., sodium sulfate or nitrate, and/or residue coming from an excess starting material.

The silica/alumina-based base may be prepared by gel kneading for kneading silica and alumina hydrogels, gel deposition, cogelation, impregnation or gel milling/kneading. The detailed procedures are described in "Preparation of Catalysts" (Takayasu Shirasaki and Naoyuki Tohdo, Nov. 19, 1973, published by Kodan-sha, p. 352 to 364).

Gel kneading kneads refined silica and alumina hydrogel with each other. The silica hydrogel is normally prepared from sodium silicate by acid-aided decomposition, electrodialysis or ion-exchanging. The alumina hydrogel is prepared by neutralizing an aluminum salt (e.g., aluminum sulfate) with a base (e.g., ammonia), the product being filtered and washed at around the neutral point and dried at low temperature. It is produced in the form of amorphous hydrate.

Gel deposition prepares silica hydrogel and forms alumina in the hydrogel slurry to produce the silica/alumina hydrogel with alumina deposited on the silica gel particles. It is said that pH adjustment is essential for preparation of the silica hydrogel of adjusted fine structures. Cogelation gelates silica and alumina simultaneously to produce the silica/alumina hydrogel. It is said that hydrogel produced has a small surface area and hence total acid quantity, although having a relatively high solid acid surface density.

Impregnation, on the other hand, impregnates silica xerogel powder or silica hydrogel with an aqueous aluminum salt solution, and evaporates/solidifies the product to prepare the silica/alumina xerogel. Gel milling/kneading mills silica and alumina xerogel powders for chemically mixing them in a dry condition to prepare the silica/alumina xerogel.

The silica/alumina gel, produced by one of the above methods, is finally calcined to produce catalytic activity (solid acidity), normally at 200 to 600°C for 3 to 8 hours.

The silica/alumina-based base may be incorporated with lanthanum (La) to prevent sintering of platinum. Lanthanum may be incorporated in the form of water-soluble salt, e.g., nitrate, carbonate, ammonium salt or acetate, or in the form of oxide, e.g., La₂O₃. It can be present in the silica/alumina in the form of metallic state (La) or oxide. Lanthanum is preferably present in the form of complex oxide of silica/alumina/lanthanum having a La-O structure, with La₂O₃ or the like.

The silica/alumina-based base for the present invention preferably has a high specific surface area, determined by the BET method, for improved dispersibility of the noble metal and hence catalytic activity. More specifically, the specific surface area is 200 m²/g or more, preferably around 400 m²/g.

The upper limit of the surface area is not limited in principle. However, it is necessary for the base to have a high surface area to an extent that it can stably retain its original shape without encountering troubles, e.g., sintering, while in service under temperature and atmosphere conditions of exhaust gases. Therefore, the surface area is particularly preferably 200 to 600 m²/g, still more preferably 250 to 500 m²/g.

The mechanisms which account for improved catalytic activity and resistance to sulfur poisoning by use of the silica/alumina-based base for the present invention are not fully substantiated. It is however considered that these advantages are brought by the synergistic effects by alumina and silica, the former improving dispersibility of the catalytically active species to enhance catalyst activity, and the latter controlling adsorption of sulfur.

The silica/alumina-based base is preferably incorporated in the catalyst as much as possible, preferably at 50% by mass or more based on the whole catalyst. In other words, the oxide catalyst of the present invention is incorporated with zeolite at below 100 parts per 100 parts of the base, preferably below 80 parts, more preferably below 50 parts, all parts by mass. The silica/alumina-based base, when incorporated at below 50% by mass based on the whole catalyst, may not suppress sulfate emissions. It is incorporated preferably at 40 to 100 g/L of the whole catalyst, more preferably 50 to 80 g/L.

### (C) Zeolite

Zeolite works for the present invention as a promoter for the silica/alumina-based base.

Zeolite varies in pore shape/size and surface area depending on silica or alumina composition which constitutes the aluminosilicate skeleton. There are various zeolite types, e.g., Y-type, β-type, mordenite, ferriorite and MFI-type.

According to the present invention, the zeolite (C) contains a 6-type zeolite. Such zeolite type can hold HC in the pores and crack its C-C bond.

Moreover, according to the present invention, the zeolite (C) has the cation site ion-exchanged with iron.

Zeolite is incorporated preferably at 20 to 60 g/L of the catalyst, more preferably 40 to 50 g/L. At below 20 g/L, zeolite may not sufficiently work to clean up components to be oxidized, e.g., HC, CO, SOF and soot. When excessively incorporated to coat a carrier of integral structure, e.g., honeycomb structure, with the catalyst, it may cause troubles, e.g., reduced cell cross-section or clogging. Moreover, necessary quantity of the catalytically active component which the carrier can support is naturally limited. Therefore, it is preferably incorporated at 60 g/L or less.

The mechanisms which account for improved HC cleaning up capacity, function of being heated by exhaust gases and suppressed sulfate emissions which the catalyst of the present invention exhibits are not fully substantiated. It is however considered that these advantages are brought by the synergistic effects by zeolite and platinum supported by the silica/alumina-based base resistant to sulfur poisoning, the former having functions of shortening length of hydrocarbon molecule chains present in a distillate as a diesel fuel oil and including HC in the pores in a releasable manner, whereas the latter having an excellent oxidation functions. In other words, a catalyst supported by a zeolite carrier containing no silica/alumina-based base can little suppress sulfate evolution, although it can be expected to exhibit HC cleaning up performance to some extent.

### (D) Carrier of integral structure

The catalyst of the present invention is not limited in structure. It may be in the form of pellets or of a structure coated with pellets. However, it is preferably in the form of so-called integral structure of flow-through or wall-flow type in which a honeycomb shape is coated with the catalyst. When used for vehicles, this structure exhibits a high strength, decreases pressure drop of exhaust gases and keeps exhaust gases and the catalyst well contacted.

This structure may be made of a ceramic material, e.g., cordierite or silicon carbide, or a metal, e.g., stainless steel, of which cordierite is more preferable. The honeycomb-shaped carrier of integral structure preferably has a triangular, square or hexagonal cross-section to reduce air resistance.

The carrier of integral structure has a cell density of 15.5 to 139.5 cells/cm² (100 to 900 cells/in²), preferably 31 to 93 cells/cm² (200 to 600 cells/in²). At above 139.5 cells/cm² (900 cells/in²), it tends to be clogged with deposited PM. At below 15.5 cells/cm² (100 cells/in²), on the other hand, effective catalyst availability may be insufficient, because of insufficient geometrical surface area.

The structure is coated with the catalyst preferably at 70 to 170 g/L of the carrier of integral structure, more preferably 80 to 130 g/L, most preferably 80 to 100 g/L. The catalyst may not have a sufficient oxidation capacity at below 70 g/L. At above 170 g/L, on the other hand, sulfur may be excessively adsorbed on the catalyst to increase sulfate concentration in exhaust gases. The present invention adopts the base which can suppress sulfur adsorption, nevertheless, however, an excessive quantity of the catalyst may have an adverse effect on suppression of sulfate emissions.

### 2. Preparation of catalyst

The method of the oxide catalyst of integral structure of the present invention is not limited. It may be produced by mixing the starting materials with an aqueous medium, and drying the resulting slurry and calcining it in a non-reactive atmosphere.

More specifically, one or more noble metal salts of platinum, palladium and rhodium (in the form of nitrate, sulfate, acetate or the like), silica/alumina-based base and adequately selected zeolite are mixed with each other in the presence of an aqueous medium. The resulting slurry is then dried and calcined in a non-reactive atmosphere for the starting material(S) of the catalytic activity or in air to produce the catalyst of the present invention. Zeolite contains one ion-exchanged with iron.

The oxide catalyst of honeycomb structure with the catalyst component(s) coating the structure may be produced by various methods. In one method, the structure is coated at one time with a slurried catalytic composition containing the silica/alumina-based base impregnated with the noble metal salt solution and zeolite. In another method, the structure is coated separately with the silica/alumina-based base impregnated with the noble metal solution and zeolite. In still another method, the structure is first coated with a slurry of the silica/alumina-based base and zeolite, and then impregnating the structure surface with the noble metal solution. The coated structure is then dried and calcined to produce the oxide catalyst of honeycomb structure.

The slurry mixture may be milled by a ball mill or the like, after being incorporated with an adequately selected acid or alkali to adjust pH and then with a surfactant or dispersed resin, instead of merely mixing the silica/alumina-based base, zeolite and noble metal salt in the presence of an aqueous medium.

The carrier of honeycomb-shaped structure may be coated by a method selected from various other known ones. However, when the honeycomb-shaped carrier, described later, is coated with the catalyst, a procedure of coating the carrier with a slurry of the starting materials by wash coating and then drying and calcining the coated carrier realizes an assured coating conditions in a simple manner.

One of the preferable methods for producing the catalyst of the present invention comprises a step (1) in which the silica/alumina-based base is impregnated with a solution containing a platinum compound, and dried to support platinum, and step (2) in which the platinum-supporting base is mixed with zeolite, the resulting catalyst composition is incorporated with water and a pH adjustor to have a slurry, which is brought into contact with the carrier of integral structure to coat the surface with the catalyst layer, and the coated carrier is dried and calcined.

### (1) Supporting platinum on silica/alumina-based base

First, a given quantity of the silica/alumina-based base is put in a container, to which a given quantity of aqueous solution or dispersion containing at least a platinum compound is added.

The platinum compounds which can be used for the present invention include platinum (II) diammine nitrite, hydroxylated platinic acid dissolved in amine and chloroplatinic acid. It is used in the form of aqueous solution or dispersion. When a palladium compound is used in combination with a platinum compound, a solution containing palladium diammine nitrate, palladium nitrate or palladium chloride is incorporated. The aqueous solution containing a platinum compound (and palladium compound) is added to the silica/alumina-based base with stirring.

When the silica/alumina-based base supports platinum and palladium, it is preferably mixed first with an aqueous solution or dispersion containing platinum and then with an aqueous solution containing palladium.

Platinum is incorporated in the catalyst layer at 1 to 10 g/L of the carrier of integral structure, preferably 2 to 5 g/L. The solution is held at room temperature for a given time to be impregnated in the silica/alumina-based base.

### (2) Coating with catalytic component

The silica/alumina-based base, on which platinum is supported by the above procedure, is mixed with zeolite, to which acetic acid and pure water are added to the container, to prepare the slurry.

Zeolite may be selected adequately from commercial products. It is a β-type zeolite ion-exchanged with iron incorporated in the form of an aqueous solution of nitrate or acetate. The β-type ion-exchanged with iron may be used either individually or in combination. It may be ion-exchanged with both iron and cerium. Moreover, it may be mixed with MFI type zeolite with hydrogen or ammonium bonded to the cation site.

Zeolite is incorporated in the catalyst layer at 20 to 60 g/L of the carrier of integral structure, preferably 20 to 50 g/L. The content beyond the above range is not desirable; zeolite can contribute to HC combustibility to a limited extent at below 20 g/L, and it is not desirable costwise at above 60 g/L.

It is preferable to add acetic acid and pure water slowly to the mixture of the silica/alumina-based base and zeolite with stirring by a mixer, to keep the system at pH 1.5 to 7.0. Acetic acid may be replaced by another acid. The system pH may be adjusted with an alkali. The mixture may be further incorporated with a surfactant and/or dispersed resin, and milled by a ball mill or the like for mixing.

Next, the honeycomb-shaped carrier is coated with the above slurry by a method selected from various known ones. However, a procedure of wash coating and then drying and calcining the coated carrier realizes an assured coating conditions in a simple manner. In this procedure, a ceramic honeycomb-shaped carrier as the carrier of integral structure (flow-through type) is immersed in the slurry to bring them into contact with each other sufficiently for, e.g., 1 to 60 seconds, and then surplus slurry in the cells is removed in a flow of air. Then, hot wind of 20 to 100°C is sprayed onto the slurry-carrying carrier to remove at least 50% of water. The dried carrier is then calcined at 200 to 900°C for 10 minutes to 10 hours in air.

This produces the oxide catalyst of honeycomb structure of the present invention, which is coated with the catalyst layer containing the catalyst at 70 to 170 g/L of the carrier, preferably 80 to 130 g/L, more preferably 80 to 100 g/L. The catalyst may not have a sufficient oxidation capacity at below 70 g/L. Coating at above 170 g/L is also undesirable, because the carrier is coated with the catalyst excessively thickly, to increase pressure drop of exhaust gases and, at the same time, push up production cost due to increased coating cycles.

### 3. Method for cleaning up exhaust gases

The method of the present invention is for cleaning up hazardous substances in exhaust gases discharged from diesel engines, including unburnt hydrocarbons, where the above-described oxide catalyst is positioned in an exhaust gas passage.

A distillate is normally used as a fuel for diesel engines. Recently, sulfur-free type diesel engine fuels containing sulfur at a content reduced to 50 ppm or less, sometimes as low as to around 10 ppm, are spreading. These low-sulfur fuels reduce sulfur poisoning of the catalysts and sulfate emissions. However, sulfur present in the fuel, although at a much reduced content, can accelerate sulfur poisoning of the catalyst and cause sulfate emissions. The exhaust gas standards, which are becoming more stringent recently, urge further improvement of exhaust gas cleaning up capacity of the catalyst, even when sulfur-free type fuels are spreading.

Moreover, high-sulfur diesel fuels are being sold in some markets, and those containing sulfur at as high as several thousand ppm are still sold, in particular in some countries abroad. Still more, illegal diesel vehicle fuels, e.g., those containing a heavy oil at above an allowable limit or reformed heavy oils which are not treated to remove sulfur, are sometimes sold.

Burning such a high-sulfur fuel has not only increased sulfate content in exhaust gases but also deteriorated catalyst capacity for cleaning up HC, CO, SOF, soot and so forth, due to notable sulfur poisoning of the catalysts.

The oxide catalyst of honeycomb structure of the present invention can efficiently clean up components to be oxidized, e.g., HC, CO, SOF and soot, even when positioned in diesel engines burning high-sulfur fuels.

As discussed above, it exhibits high capacity for cleaning up exhaust gases discharged from diesel engines burning high-sulfur fuels. It can keep capacity for cleaning up hazardous components, e.g., HC, CO, SOF and soot, while suppressing sulfate emissions from diesel engines burning fuels containing sulfur at about 5000 ppm.

The method of the present invention, when applied to cleaning up exhaust gases from diesel engines, the oxide catalyst of integral structure is preferably kept at 150°C or higher, preferably 200°C or higher, more preferably 250°C or higher, particularly preferably 250 to 450°C. It may not sufficiently exhibit catalytic activity at below 150°C. In general, it can be kept at 150°C or higher by natural heating by exhaust gases. However, it may be heated by a separate auxiliary heating or heat-retaining means. Positioning the catalyst at near the engine exhaust is an effective measure to keep the catalyst to a high temperature level.

The method of the present invention for cleaning up exhaust gases is applicable to exhaust gas space velocity of 5,000 to 400,000/hour. At below 5,000/hour, the catalyst is too large in volume for exhaust gases discharged from a diesel engine, and is difficult to be mounted in a vehicle. At above 400,000/hour, the catalyst may not efficiently clean up HC, because of insufficient contact time of exhaust gases with the catalyst.

The functions of the oxide catalyst of honeycomb structure of the present invention are described mainly in the case where high-sulfur fuel oils are used for diesel engines. It is however needless to say that the oxide catalyst exhibits excellent exhaust gas cleaning up capacity when low-sulfur fuels are used. A fuel oil contains sulfur, even when it is of a so-called sulfur-free type, and prevention of deposition of sulfur on a catalyst is advantageous for exhaust gas quality.

The catalyst of the present invention is described as an oxide catalyst. This does not mean that it has only oxidation functions. The catalyst technology disclosed herein encompass catalysts of broader oxidation functions, not limited to those for HC, CO, SOF, soot and so forth. The catalyst of the present invention may cover functions other than oxidation.

The method of the present invention is applicable to various exhaust gas cleaning up systems varying depending on internal combustion engine and exhaust gas standard types. For example, it is applicable to systems with the oxide catalyst for exhaust gas cleaning up, followed by a filter for capturing PM in exhaust gases or catalyzed filter, followed by a catalyst for adsorbing/cleaning up NOx, or followed by a filter and a combination of catalysts.

The present invention encompasses a system in which an additional fuel (unburnt hydrocarbons) is injected into exhaust gases and passed through the oxide catalyst positioned in the exhaust gas passage to increase gas temperature. Supply of additional unburnt hydrocarbons may be effected by temporarily increasing a fuel to be injected into a combustion chamber of internal combustion engine, or injecting a fuel into an exhaust pipe or the catalyst system. The catalyst of the present invention can exhibit its notable effects of oxidation of hydrocarbons and increasing temperature of exhaust gases in each case.

It is stressed that injection of additional fuel into a combustion chamber of internal combustion engine is a preferable measure, because it can be achieved easily by controlling the fuel injection system. It is needless to say, when another catalyst is positioned downstream of the catalyst of the present invention, that unburnt hydrocarbons should be supplied by an adequate means to the additional catalyst, if required.

The catalyst of the present invention may be stacked on another catalyst of different composition and function(s). These cases include an exhaust gas cleaning up system which operates at relatively high maximum service temperature; another system in which the catalyst is forcibly regenerated when exhaust gases passing through the catalyst are at relatively low temperature; and still another system in which importance is placed on improvement of diesel fuel oil combustion performance or prevention of poisoning of the catalyst. The catalyst of the present invention is intended to satisfy specific requirements resulting from atmospheres in which it is used.

### EXAMPLES

The preferred embodiments of the present invention are described by EXAMPLE, which by no means limits the present invention.

### EXAMPLE 1

A catalyst metal (Pt) was supported by a silica/alumina-based base, and then mixed with zeolite to prepare the catalyst component by the procedure described below. Then, it was spread on a carrier of integral structure to prepare the oxide catalyst of integral structure of the present invention.

### <Preparation of slurry>

First, a silica/alumina-based base containing silica at 5% by mass was prepared. It had a specific surface area of 240 m²/g.

The base was impregnated with a Pt solution [20% by mass aqueous solution containing platinum (II) diammine nitrite (metallic Pt element content: 1.47% by mass)], to prepare the Pt/silica/alumina-based base. It was then mixed with a zeolite composition of β-zeolite ion-exchanged with iron and ZSM-5, and water and acetic acid (respective 86 and 7.6 parts per 100 parts of the zeolite composition) with stirring, to prepare the slurry.

The slurry was composed of Pt at 2 g/L, silica/alumina-based base at 60 g/L, β-zeolite ion-exchanged with iron at 20 g/L and ZSM-5 at 10g/L, based on unit volume of the catalyst of integral structure, described later.

### <Preparation of oxide catalyst of integral structure>

A flow-through type cordierite carrier (400 cpsi/6mil) was coated with the above slurry by a wash coating procedure, and then dried at 120 °C and calcined at 500°C for 0.5 hours to prepare the oxide catalyst of integral structure.

It contained the total catalyst components at 92 g/L.

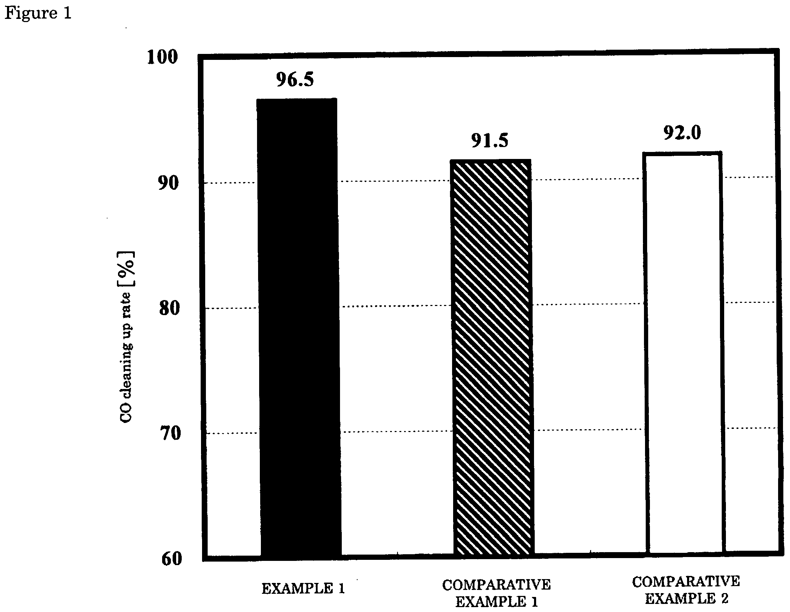

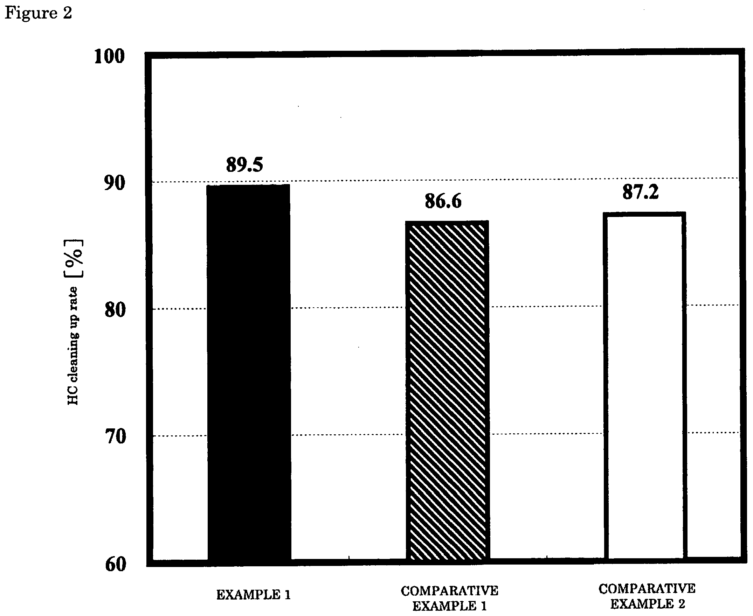

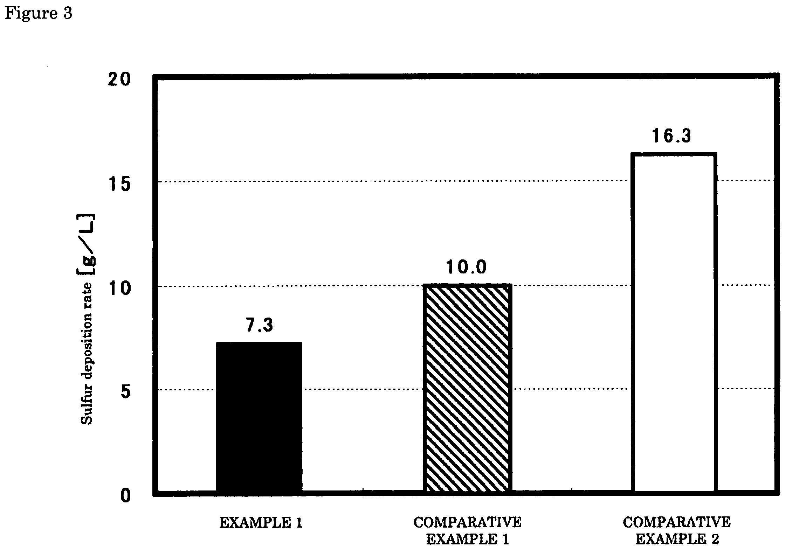

It was aged and measured for its exhaust gas cleaning up performances under the following conditions. The results are given in Figs. 1 to 3, which present CO cleaning up performance, HC cleaning up performance and sulfur deposition rate, respectively.
Catalyst volume: 2.5 L (5.66 Φ (in. in diameter) and 6 in. high)
Aging conditions: 600°C and 50 hours

### <Oxidation performance evaluation conditions>

Engine: Diesel engine, 5 L, naturally aspirated
Fuel: Diesel fuel oil, JIS No.2 (sulfur content: 35 ppm)
Evaluation mode: ECE+EUDC (maximum exhaust gas temperature: 350°C)
HC and CO cleaning up rate analyzer: MEXA-9500 (Horiba)

### <Sulfur deposition evaluation conditions>

Sample size: 24 Φ (mm in diameter) and 66 mm high
Model gas composition: SO₂ (2%) + C₂H₆/C₃H₈: 250 ppm, CO: 100 ppm, H₂O: 15%, and balance: air
Total flow rate: 2.4 L/minute
Deposited sulfur analyzer: Sample powder was quantitatively analyzed by an XRF analyzer to determine deposited sulfur.

### COMPARATIVE EXAMPLE 1

A catalyst metal (Pt) was supported by gamma-alumina in place of the silica/alumina-based base used in EXAMPLE 1, and mixed with CeO₂ and β-zeolite ion-exchanged with iron, used in EXAMPLE 1, to prepare the catalyst component by the procedure. Then, a carrier of integral structure was coated by the catalyst component to prepare the oxide catalyst of integral structure for comparison. It contained no silica.

### <Preparation of slurry>

First, gamma-alumina (specific surface area: 200 m²/g) was impregnated with a Pt solution [20% by mass aqueous solution containing platinum (II) diammine nitrite (metallic Pt element content: 2.1% by mass)], to prepare the Pt/gamma-alumina. It t was then mixed with CeO₂ and zeolite, to which ion-exchanged water and acetic acid were added with stirring to prepare the slurry. It contained water and acetic acid at 86 and 7.6 parts per 100 parts of the Pt/gamma-alumina, all parts by mass.

The slurry was composed of Pt at 2 g/L, Pt/gamma-alumina at 156 g/L, CeO₂ at 12 g/L and β-zeolite ion-exchanged with iron at 43 g/L, based on unit volume of the catalyst of integral structure, described later.

### <Preparation of oxide catalyst of integral structure>

A flow-through type cordierite carrier (400 cpsi/6mil) was coated with the above slurry by a wash coating procedure, and then dried at 120 °C and calcined at 500°C for 0.5 hours to prepare the oxide catalyst of integral structure. It contained the total catalyst components at 211 g/L.

### <Evaluation of catalyst performances>

It was aged and measured for its exhaust gas cleaning up performances under the conditions described above. The results are given in Figs. 1 to 3, which present CO cleaning up performance, HC cleaning up performance and sulfur deposition, respectively.

### COMPARATIVE EXAMPLE 2

The oxide catalyst of integral structure of COMPARATIVE EXAMPLE 2 was prepared in the same manner as in EXAMPLE 1, except that only Pt/gamma-alumina used in COMPARATIVE EXAMPLE 1 was used. It contained the total catalyst components at 202 g/L and platinum at 2 g/L. It contained neither silica/alumina nor zeolite.

It was aged and measured for its exhaust gas cleaning up performances under the conditions described above. The results are given in Figs. 1 to 3, which present CO cleaning up performance, HC cleaning up performance and sulfur deposition, respectively.

### [Evaluation results]

The evaluation results indicate that the oxide catalyst prepared in EXAMPLE 1 has a higher CO and HC cleaning up rates and a lower sulfur deposition rate than those prepared in COMPARATIVE EXAMPLES 1 and 2, confirming that silica in the silica/alumina-based base contributes to abatement of sulfates and zeolite to improved combustibility of unburnt hydrocarbons.

As discussed, the oxide catalyst of the present invention for exhaust gas cleaning up suppresses deposition of sulfur thereon and also sulfate emissions while keeping a high capacity for cleaning up hazardous components in exhaust gases.

The results observed in EXAMPLE 1 indicate that the oxide catalyst of the present invention for exhaust gas cleaning up can exhibit cleaning up capacity equivalent to or higher than a catalyst produced based on a conventional concept by a smaller quantity.

## Claims

1. An oxide catalyst for exhaust gas cleaning up which can suppress evolution of sulfates, containing at least one species of noble metal (A) showing a catalytic activity for oxidation of hydrocarbons, a silica/alumina-based base (B) which supports the noble metal (A) and zeolite (C), wherein the zeolite (C) contains a β-type zeolite and has the cation site ion-exchanged with iron, wherein the noble metal (A) is at least one species selected from the group consisting of platinum, palladium and rhodium, and wherein the silica/alumina-based base (B) contains silica at 1 to 30% by mass.

2. The oxide catalyst according to Claim 1 for exhaust gas cleaning up, wherein the noble metal (A) is essentially composed of platinum.

3. The oxide catalyst according to Claim 1 or 2 for exhaust gas cleaning up, wherein the silica/alumina-based base (B) has a specific surface area of 200 m²/g or more.

4. An oxide catalyst of honeycomb structure, wherein a honeycomb-shaped carrier is coated with the oxide catalyst according to one of Claims 1 to 3 for exhaust gas cleaning up.

5. The oxide catalyst of honeycomb structure according to Claim 4, wherein the honeycomb-shaped carrier is coated with the oxide catalyst for exhaust gas cleaning up at 70 to 170 g/L of the carrier.

6. The oxide catalyst of honeycomb structure according to Claim 4 or 5, wherein the noble metal (A) is incorporated at 1 to 10 g/L of the carrier.

7. The oxide catalyst of honeycomb structure according to Claim 4 or 5, wherein the silica/alumina-based base (B) is incorporated at 40 to 100 g/L of the carrier.

8. The oxide catalyst of honeycomb structure according to Claim 4 or 5, wherein the zeolite (C) is incorporated at 20 to 60 g/L of the carrier.

9. The oxide catalyst of honeycomb structure according to one of Claims 4 to 8, wherein the honeycomb-shaped carrier is of a flow-through type having a cell density of 15.5 to 139.5 cells/cm² (100 to 900 cells/in²).

10. A method for exhaust gas cleaning up, wherein the oxide catalyst of honeycomb structure according to one of Claims 4 to 9 is positioned in an exhaust gas passage of diesel engine and allows the exhaust gases to pass therethrough.

11. The method according to Claim 10 for exhaust gas cleaning up, wherein a fuel oil which the diesel engine burns contains sulfur at 10 ppm or more.

## Patentansprüche

1. Oxidkatalysator für Abgasaufreinigung, welcher Entwicklung von Sulfaten unterdrücken kann, enthaltend mindestens eine Spezies eines Edelmetalls (A), welches eine katalytische Aktivität zur Oxidation von Kohlenwasserstoffen zeigt, einen Grundbestandteil auf Silica/Aluminiumoxid-Basis (B), welcher das Edelmetall (A) stützt, und Zeolith (C), wobei der Zeolith (C) einen Zeolith vom β-Typ enthält und die Kationenstelle ionenausgetauscht mit Eisen aufweist, wobei das Edelmetall (A) mindestens eine Spezies ist, ausgewählt aus der Gruppe, bestehend aus Platin, Palladium und Rhodium, und wobei der Grundbestandteil auf Silica/Aluminiumoxid-Basis (B) Silica bei 1 bis 30 Masse-% enthält.

2. Oxidkatalysator gemäß Anspruch 1 zur Abgasaufreinigung, wobei das Edelmetall (A) im Wesentlichen Platin umfasst.

3. Oxidkatalysator gemäß Anspruch 1 oder 2 zur Abgasaufreinigung, wobei der Grundbestandteil auf Silica/Aluminiumoxid-Basis (B) eine spezifische Oberfläche von 200 m²/g oder mehr aufweist.

4. Oxidkatalysator von Bienenwabenstruktur, wobei ein Bienenwaben-geformter Träger mit dem Oxidkatalysator gemäß einem der Ansprüche 1 bis 3 zur Abgasaufreinigung beschichtet ist.

5. Oxidkatalysator von Bienenwabenstruktur gemäß Anspruch 4, wobei der Bienenwaben-geformte Träger mit dem Oxidkatalysator zur Abgasaufreinigung bei 70 bis 170 g/L bezüglich des Trägers beschichtet ist.

6. Oxidkatalysator von Bienenwabenstruktur gemäß Anspruch 4 oder 5, wobei das Edelmetall (A) bei 1 bis 10 g/L bezüglich des Trägers inkorporiert ist.

7. Oxidkatalysator von Bienenwabenstruktur gemäß Anspruch 4 oder 5, wobei der Grundbestandteil auf Silica/Aluminiumoxid-Basis (B) bei 40 bis 100 g/L bezüglich des Trägers inkorporiert ist.

8. Oxidkatalysator von Bienenwabenstruktur gemäß Anspruch 4 oder 5, wobei der Zeolith (C) bei 20 bis 60 g/L bezüglich des Trägers inkorporiert ist.

9. Oxidkatalysator von Bienenwabenstruktur gemäß einem der Ansprüche 4 bis 8, wobei der Bienenwaben-geformte Träger von einem Durchfluß-Typ mit einer Zellendichte von 15,5 bis 139,5 Zellen/cm² (100 bis 900 Zellen/in²) ist.

10. Verfahren zur Abgasaufreinigung, wobei der Oxidkatalysator von Bienenwabenstruktur gemäß einem der Ansprüche 4 bis 9 in einer Abgasleitung eines Dieselmotors angeordnet ist und zuläßt, dass die Abgase dadurch geleitet werden.

11. Verfahren gemäß Anspruch 10 zur Abgasaufreinigung, wobei ein Schweröl, welches der Dieselmotor verbrennt, Schwefel bei 10 ppm oder mehr enthält.

## Revendications

1. Catalyseur d'oxyde pour l'épuration de gaz d'échappement qui peut supprimer l'évolution de sulfates, comprenant au moins une espèce de métal noble (A) présentant une activité catalytique pour l'oxydation des hydrocarbures, une base à base de silice/alumine (B) qui supporte le métal noble (A) et la zéolite (C), dans lequel la zéolite (C) comprend une zéolite de type β et dont le site cationique a échangé des ions avec le fer, dans lequel le métal noble (A) est au moins une espèce sélectionnée parmi le groupe consistant en platine, palladium et rhodium et dans lequel la base à base de silice/alumine (B) comprend de 1 à 30% en masse de silice.

2. Catalyseur d'oxyde selon la revendication 1 pour l'épuration de gaz d'échappement, dans lequel le métal noble (A) est essentiellement composé de platine.

3. Catalyseur d'oxyde selon la revendication 1 ou 2 pour l'épuration de gaz d'échappement, dans lequel la base à base de silice/alumine (B) présente une aire de surface spécifique de 200 m²/g ou plus.

4. Catalyseur d'oxyde de structure en nid d'abeilles, dans lequel un support en forme de nid d'abeilles est revêtu du catalyseur d'oxyde selon l'une des revendications 1 à 3 pour l'épuration de gaz d'échappement.

5. Catalyseur d'oxyde de structure en nid d'abeilles selon la revendication 4, dans lequel le support en forme de nid d'abeilles est revêtu du catalyseur d'oxyde pour l'épuration de gaz d'échappement dans une concentration de 70 à 170 g/L du support.

6. Catalyseur d'oxyde de structure en nid d'abeilles selon la revendication 4 ou 5, dans lequel le métal noble (A) est incorporé dans une concentration de 1 à 10 g/L du support.

7. Catalyseur d'oxyde de structure en nid d'abeilles selon la revendication 4 ou 5, dans lequel la base à base de silice/alumine (B) est incorporée dans une concentration de 40 à 100 g/L du support.

8. Catalyseur d'oxyde de structure en nid d'abeilles selon la revendication 4 ou 5, dans lequel la zéolite (C) est incorporée dans une concentration de 20 à 60 g/L du support.

9. Catalyseur d'oxyde de structure en nid d'abeilles selon l'une des revendications 4 à 8, dans lequel le support en forme de nid d'abeilles est d'un type à écoulement présentant une densité de cellules de 15,5 à 139,5 cellules/cm² (100 à 900 cellules/in²).

10. Procédé d'épuration de gaz d'échappement, dans lequel le catalyseur d'oxyde de structure en nid d'abeilles selon l'une des revendications 4 à 9 est positionné dans un passage des gaz d'échappement d'un moteur diesel et permet aux gaz d'échappement de passer à travers lui.

11. Procédé selon la revendication 10 pour l'épuration de gaz d'échappement, dans lequel un combustible liquide gazole que le moteur diesel brûle contient du soufre à 10 ppm ou plus.
